(19) Europäisches Patentamt
European Patent Office
Office européen des brevets

(11) **EP 4 492 857 A1**

(12) **EUROPEAN PATENT APPLICATION**
published in accordance with Art. 153(4) EPC

(43) Date of publication:
**15.01.2025 Bulletin 2025/03**

(21) Application number: **23841783.6**

(22) Date of filing: **24.03.2023**

(51) International Patent Classification (IPC):
*H04W 24/08* (2009.01)

(52) Cooperative Patent Classification (CPC):
**H04W 24/08; H04W 72/1263; H04W 72/542**

(86) International application number:
**PCT/CN2023/083778**

(87) International publication number:
**WO 2024/016708 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.07.2022 CN 202210846533**

(71) Applicant: **ZTE Corporation**
**Shenzhen, Guangdong 518057 (CN)**

(72) Inventors:
• **CHEN, Shijun**
**Shenzhen, Guangdong 518057 (CN)**
• **LI, Junqiang**
**Shenzhen, Guangdong 518057 (CN)**
• **CHEN, Dawei**
**Shenzhen, Guangdong 518057 (CN)**
• **XIA, Shuqiang**
**Shenzhen, Guangdong 518057 (CN)**

(74) Representative: **Boult Wade Tennant LLP**
**Salisbury Square House**
**8 Salisbury Square**
**London EC4Y 8AP (GB)**

(54) **SENSING METHOD, RECEIVER, AND STORAGE MEDIUM**

(57) The present application discloses a sensing method, a receiver, and a storage medium. The sensing method comprises: determining arrival times and arrival angles of a multipath signal at different moments according to the multipath signal received at different moments; determining reflection path attributes of the multipath signal at different moments according to the arrival times and the arrival angles at different moments; obtaining sensing results on a current environment at different moments according to the arrival times, the arrival angles, and the reflection path attributes at different moments; and determining whether the current environment has changed according to the sensing results at different moments.

| |
|---|
| Determine arrival times and arrival angles of a multipath signal at different moments according to the multipath signal received at different moments — S101 |
| Determine reflection path attributes of the multipath signal at different moments according to the arrival times and arrival angles at different moments — S102 |
| Obtain sensing results on a current environment at different moments according to the arrival times, the arrival angles, and the reflection path attributes at different moments — S103 |
| Determine whether the current environment has changed according to sensing results at different moments — S104 |

FIG. 1B

EP 4 492 857 A1

**Description**

CROSS-REFERENCE TO RELATED APPLICATIONS

The present application is proposed based on and claims priority to Chinese Patent Application No. 202210846533.6, filed on July 19, 2022, the entire contents of which are incorporated herein by reference.

TECHNICAL FIELD

The embodiments of the present application relate to, but are not limited to, the technical field of communications, in particular to a sensing method, a receiver, and a storage medium.

BACKGROUND OF THE INVENTION

In the related art, a wireless communication network satisfies ubiquity, so realization of ubiquitous sensing through the wireless communication network becomes the main feasible technical route. Ubiquitous sensing needs to be realized in various complex scenarios, such as a multipath environment. However, there are few researches on the sensing of the multipath environment at present, and fewer sensing technologies can be put into commercial use. The sensing of the multipath environment is a research hotspot in standardization and academia, and it is in the early stage of technological breakthrough. Therefore, how to realize the sensing on a current environment in the multipath environment has become an urgent technical problem to be solved.

SUMMARY OF THE INVENTION

The embodiments of the present application provide a sensing method, a receiver, and a storage medium, which can realize sensing on a current environment using a multipath signal in a multipath environment.
In a first aspect, an embodiment of the present application provides a sensing method, including:
determining arrival times and arrival angles of a multipath signal at different moments according to the multipath signal received at different moments; determining reflection path attributes of the multipath signal at different moments according to the arrival times and the arrival angles at different moments; obtaining sensing results on a current environment at different moments according to the arrival times, the arrival angles, and the reflection path attributes at different moments; and determining whether the current environment has changed according to the sensing results at different moments.
In a second aspect, an embodiment of the present application provides a receiver, including a memory, a processor, and a computer program stored on the memory and capable of running on the processor, and the sensing method according to the first aspect above is implemented when the computer program is executed by the processor.
In a third aspect, an embodiment of the present application provides a computer readable storage medium which stores a computer-executable program. The computer-executable program is used to make a computer execute the sensing method according to the first aspect above.
The embodiment of the present application includes: determining arrival times and arrival angles of a multipath signal at different moments according to the multipath signal received at different moments; determining reflection path attributes of the multipath signal at different moments according to the arrival times and the arrival angles at different moments; obtaining sensing results on a current environment at different moments according to the arrival times, the arrival angles, and the reflection path attributes at different moments; and determining whether the current environment has changed according to the sensing results at different moments. That is to say, the multipath signal received at different moments is analyzed and calculated to obtain the arrival times and the arrival angles of the multipath signal at different moments, and then the reflection path attributes of the multipath signal at different moments are determined according to the arrival times and the arrival angles at different moments, the sensing results on the current environment at different moments are obtained according to the arrival times, the arrival angles, and the reflection path attributes at different moments, and the sensing result at a current moment is compared with the sensing result at a previous moment, so as to determine whether the current environment has changed. Based on this, compared with the prior art, the sensing method of the present application can realize sensing on the current environment by means of the multipath signal under the multipath environment by analyzing the multipath signal received at different moments.

BRIEF DESCRIPTION OF DRAWINGS

FIG. 1A is a schematic diagram of an implementation environment used to execute a sensing method provided by an embodiment of the present application;

FIG. 1B is a flow diagram of a sensing method provided by an embodiment of the present application;

FIG. 2 is a schematic diagram of a reflection path attribute of a multipath signal as S1 provided by an embodiment of the present application;

FIG. 3 is a schematic diagram of a reflection path attribute of a multipath signal as S2 provided by an embodiment of the present application;

FIG. 4 is a schematic diagram of a reflection path attribute of a multipath signal as S3 provided by an embodiment of the present application;

FIG. 5 is a schematic diagram of calculation of positions among a target object, a transmitter and a receiver provided by an embodiment of the present application;

FIG. 6 is a sub flow diagram of a sensing method provided by an embodiment of the present application;

FIG. 7 is a sub flow diagram of a sensing method provided by another embodiment of the present application;

FIG. 8 is a sub flow diagram of a sensing method provided by another embodiment of the present application;

FIG. 9 is a sub flow diagram of a sensing method provided by another embodiment of the present application;

FIG. 10 is a schematic diagram of a case where a person is moving around a room and positions at Tn moment and Tn+1 moment are inconsistent provided by an embodiment of the present application;

FIG. 11 is a schematic diagram of a case where there is no person in a room at Tn moment but there is a person in the room at Tn+1 moment provided by an embodiment of the present application; and

FIG. 12 is a schematic structural diagram of a receiver provided by an embodiment of the present application.

DETAILED DESCRIPTION OF THE INVENTION

In order to make the objectives, technical solutions and advantages of the present application more clearly, the present application is further described in detail below with reference to the accompanying drawings and embodiments. It is to be understood that the specific embodiments described herein are only illustrative of the present application and are not intended to limit the present application.

It should be understood that in the description of the embodiments of the present application, the meaning of a plurality of (or multiple) is more than two; greater than, less than, more than, etc. are understood to exclude this number; and above, below, within, etc. are understood to include this number. If described, "first", "second", etc. are merely provided to distinguish technical features and cannot be construed as indicating or implying relative importance or implicitly indicating the number of technical features indicated or implicitly indicating the sequence of technical features indicated.

At present, we are in the era of the fourth Industrial Revolution, which has an important characteristic of ubiquitous intelligence. On the one hand, an intelligent technology deepens people's lives, bringing great convenience and new experience to people's lives, and on the other hand, the intelligent technology will deepen all walks of life, industrial upgrading is realized through intelligence, and industrial efficiency is improved. Development in both directions will greatly liberate mankind from the shackles of low-level production.

A ubiquitous intelligent technology mainly includes a ubiquitous sensing technology, a ubiquitous computing technology, product research and development, etc. Therefore, ubiquitous intelligence needs a ubiquitous system. At present, in a deployed system, only a wireless communication network satisfies ubiquity, so realization of ubiquitous sensing and ubiquitous computing through the wireless communication network becomes the main feasible technical route.

At present, the field of sensing has in-depth research mainly in the field of radar, and the application scenarios of radar equipment are mainly the sensing on empty aircrafts, such as airport radar; and short-range sensing, such as vehicle-mounted radar. Both these scenarios are simple scenarios. Ubiquitous sensing needs to be realized in various complex scenarios, such as an indoor multipath environment, a ground multi-building environment, a multi-vehicle environment, and a shopping mall multi-person environment. At present, there are few researches on the sensing on a multipath environment, and even fewer sensing technologies can be put into commercial use. The sensing on the multipath environment is a research hotspot in standardization and academia, and it is in the early stage of technological breakthrough. Therefore, how to realize the sensing on a current environment in the multipath environment has become an urgent technical problem to be solved.

Based on this, embodiments of the present application provide a sensing method, a receiver, and a computer readable storage medium. A sensing method of one of the embodiments includes: determining arrival times and arrival angles of a multipath signal at different moments according to the multipath signal received at different moments; determining reflection path attributes of the multipath signal at different moments according to the arrival times and the arrival angles at different moments; obtaining sensing results on a current environment at different moments according to the arrival times, the arrival angles, and the reflection path attributes at different moments; and determining whether the current environment has changed according to the sensing results at different moments. In the above embodiment, the multipath signal received at different moments is analyzed and calculated to obtain the arrival times and the arrival angles of the multipath signal at different moments, and then the reflection path attributes of the multipath signal at different moments are determined according to the arrival times and the arrival angles at different moments, the sensing results on the current environment at different moments are obtained according to the arrival times, the arrival angles, and the reflection path attributes at different moments, and the sensing result at a current moment is compared with the sensing result at a previous moment, so as to determine whether the current environment has changed. Based on this, compared with the prior art, the sensing method of the present application can realize sensing on the current environment by means of the multipath signal under the multipath environment by analyzing the multipath signal received at different moments.

The embodiments of the present application are further illustrated below in conjunction with the accompanying drawings.

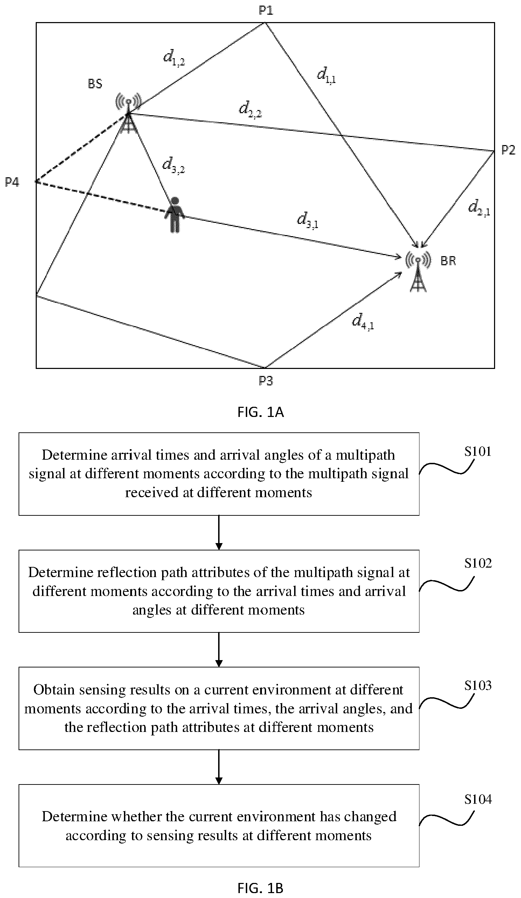

As shown in FIG. 1A, FIG. 1A is a schematic diagram of an implementation environment used to execute a sensing method provided by an embodiment of the present application.

In an example of FIG. 1A, the implementation environment includes a transmitter BS and a receiver BR, where the transmitter BS is responsible for transmitting a multipath signal, the receiver BR is responsible for receiving the multipath signal, and there may or may not be a direct path between the transmitter BS and the receiver BR. The multipath signal received by the receiver BR may be a multipath signal reflected once by the environment, or a multipath signal reflected once by a moving object in the environment, or a multipath signal reflected multiple times by the environment or the moving object. It should be noted that the multipath signal includes but is not limited to a special sensing signal, such as an orthogonal frequency division multiplexing signal and a linear frequency modulation signal.

It may be understood by those skilled in the art that the implementation environment may be applied to 5G and 6G communication network systems, subsequently evolved mobile communication network systems, etc. This embodiment does not specifically limit this.

It may be understood by those skilled in the art that the implementation environment shown in FIG. 1A is not construed as limiting the embodiment of the present application and may include more or fewer components than illustrated, or combine some components, or different components for arrangement.

Based on the above implementation environment, various embodiments of the sensing method of the present application are proposed below.

As shown in FIG. 1B, FIG. 1B is a flow diagram of a sensing method provided by an embodiment of the present application. A sensing method may be applied to a receiver, the receiver includes but is not limited to a receiving base station and a multi-antenna receiver, and the sensing method includes but is not limited to the following steps:

step S101: arrival times and arrival angles of a multipath signal at different moments are determined according to the multipath signal received at different moments;

step S102: reflection path attributes of the multipath signal at different moments are determined according to the arrival times and arrival angles at different moments;

step S103: sensing results on a current environment at different moments are obtained according to the arrival times, the arrival angles, and the reflection path attributes at different moments; and

step S104: whether the current environment has changed is determined according to the sensing results at different moments.

In a feasible implementation, taking that the receiver is a multi-antenna receiver as an example, the multipath signal received at different moments is analyzed and calculated by the multi-antenna receiver to obtain the arrival times and the arrival angles of the multipath signal at different moments, and then the reflection path attributes of the multipath signal at different moments are determined according to the arrival times and the arrival angles at different moments, the sensing results on the current environment at different moments are obtained according to the arrival times, the arrival angles, and the reflection path attributes at different moments, and the sensing result at a current moment is compared with the sensing result at a previous moment, so as to determine whether the current environment has changed. Based on this, compared with the prior art, the sensing method of the present application can realize sensing on the current environment by means of the multipath signal under the multipath environment by analyzing the multipath signal received at different moments.

In a feasible implementation, as shown in FIG. 1A, the transmitter transmits the multipath signal on a set time Tn and wireless resources. The receiver receives the multipath signal and calculates an arrival time $ti$ and an arrival angle $\alpha i$ of the multipath signal, where i is the number of multiple paths of the multipath signal. A position $Pi$ of the reflection point of the received multipath signal in the map environment is calculated according to the arrival angle $\alpha i$ of the multipath signal, and a distance $d_{i,1}$ from Pi to a coordinate position PBR of the receiver and a distance $d_{i,2}$ from Pi to a coordinate position PBS of the transmitter are calculated. Then the reflection paths in the map environment and an actual reflection path of a moving object are classified according to a decision condition to determine the reflection path attribute $Si$ of the multipath signal. According to the arrival time $ti$ and the arrival angle $\alpha i$ of the multipath signal, a position $\overline{Pi}$ of an actual physical reflection point of a target object in the environment is calculated, and a sensing result $A_{Tn} = \{(ti, \alpha i, Si, \overline{Pi}), i \geq 1\}$ at Tn moment is recorded. By comparing a sensing result $A_{Tn}$ at the current moment with a sensing result $A_{Tn-1}$ at a previous moment, whether the current environment has changed is determined. It should be noted that the wireless resources include, but are not limited to, time domain and frequency domain resources allocated by symbol, subcarrier, frame, etc. as a unit.

In a feasible implementation, the transmitter and receiver complete clock synchronization before the transmitter transmits the multipath signal. The completion of clock synchronization between the transmitter and the receiver means that the transmitter and the receiver have completed synchronization to realize clock synchronization. Or, the transmitter and the receiver do not complete synchronization, it is necessary to measure a clock difference, hardware link delay and other information of the transmitter and the receiver, and calculate to obtain a synchronization correction amount, which is used to correct the received arrival time to realize clock synchronization. It should be noted that the arrival time $ti$ in the present application refers to the arrival time after correction.

In a feasible implementation, as shown in FIG. 1A, a coordinate of the receiver is taken as the origin, the arrival angle of the multipath signal received by the receiver is used as a virtual line, and a first virtual intersection point between the virtual line and a building interface in the map environment is the position $Pi$ of the reflection point of the multipath signal in the map environment. For example, P1, P2, P3 and P4 in FIG. 1A are positions of reflection points of the multipath signal at the interface where a building wall is located in the map environment, where $d_{i,1}$ is used to represent a distance from the position coordinate $Pi$ of the reflection point of the multipath signal in the map environment to the receiver BR, $d_{i,2}$ is used to represent a distance from the position coordinate Pi of the reflection point of the multipath signal in the map environment to the transmitter BS, and i is the serial number of each path signal in the multipath signal. It should be noted that the position $Pi$ of the reflection point may be a three-dimensional map coordinate (x, y, z). It should be noted that the map environment includes, but is not limited to, a building structure where the known moving object is located, an object placed in the room, a building or a map environment with a coordinate system formed by an object.

In a feasible implementation, the multi-antenna receiver receives the multipath signal reflected to the multi-antenna receiver by an object in the environment, the multi-antenna receiver analyzes and calculates time-domain impulse responses of the multipath signal received by multiple antennas, the arrival time $ti$ of the multipath signal and a distributed time interval corresponding to the impulse response of the arrival time $ti$ of the multipath signal are determined according to an impulse response sequence, and then, according to the time interval corresponding to the impulse response of the arrival time $ti$ of the multipath signal, multi-antenna data is obtained to analyze the arrival angle $\alpha i$ of each path, where the arrival angle $\alpha i$ includes a pitch angle $\theta$ and an azimuth angle $\varphi$.

In a feasible embodiment, the distance from the position coordinate $Pi$ of the reflection point of the multipath signal in the map environment to the coordinate PBR of the receiver is $d_{i,1}$, the distance from the position coordinate $Pi$ of the reflection point of the multipath signal in the map environment to the coordinate PBS of the transmitter is $d_{i,2}$, and $d_{i,1}$ and $d_{i,2}$ can be calculated according to conventional mathematical methods, where $d_{i,1} = |PBR\text{-}Pi|$, $d_{i,2} = |PBS\text{-}Pi|$.

In a feasible implementation, the reflection path attributes $Si$ of the multipath signal is divided into three categories by the present application, namely, a first reflection path S1, a second reflection path S2, and a third reflection path S3, that is, $Si \in \{S1, S2, S3\}$. S1 is a wireless path reflected once by the environment, S2 is a path reflected once by the moving object in the environment, and S3 is a wireless path reflected multiple times by the environment or the moving object. The reflection path attribute of the multipath signal may be determined by the following judgment conditions: when $D_i = d_{i,1} + d_{i,2}$ is satisfied, the reflection path attribute of the multipath signal is determined as the first reflection path S1; when $D_i < d_{i,1} + d_{i,2}$ is satisfied, the reflection path attribute of the multipath signal is determined as the second reflection path S2; and when $D_i > d_{i,1} + d_{i,2}$, the reflection path attribute of the multipath signal is determined as the third reflection path S3. It should be noted that a distance value from the position of the target object to the receiver is $|\overline{Pi}\text{-}PBR|$, a distance value from the position of the target object to the transmitter is $|\overline{Pi}\text{-PBS}|$, and the sum of both is $D_i = |\overline{Pi}\text{-PBS}| + |\overline{Pi}\text{-PBR}|$, where $\overline{Pi}$ is a position coordinate of a physical reflection point of the target object in the environment at the current moment, which is used to represent an actual physical position coordinate of the target object at the current moment. $D_i$ may be calculated according to the arrival time $ti$ of the previously estimated multipath signal, that is, $D_i = ti * v$, where v is the speed of light.

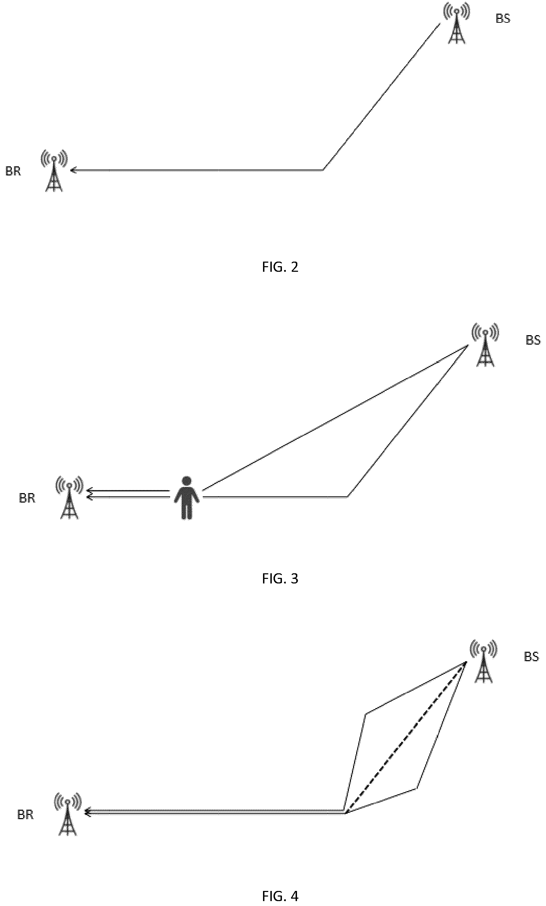

In a feasible implementation, as shown in FIG. 2, when the reflection path attribute Si of the multipath signal is S1, it represents that the position coordinate $\overline{Pi}$ of the target object at the current moment is consistent with the position coordinate $Pi$ of the reflection point of the multipath signal in the map environment, that is, $\overline{Pi} = Pi$, and the sensing result at the current moment is recorded as $A_{Tn} = \{(ti, \alpha i, Si, \overline{Pi}), i \geq 1\}$. As shown in FIG. 3, when the reflection path attribute Si of the multipath signal is S2, the position coordinate of the target object at the current moment is

$$\overline{P}_i = D_{i,1} * \frac{(Pi - PBR)}{|Pi - PBR|} + PBR$$

, where $D_{i,1}$ is an actual physical distance value between the target object at the current moment to the receiver, $Pi$ is a position coordinate of the reflection point of the multipath signal at the current moment in the map environment, and PBR is a position coordinate of the receiver in map environment. The sensing result at the current moment is recorded as $A_{Tn} = \{(ti, \alpha i, Si, \overline{Pi}), i \geq 1\}$. As shown in FIG. 4, when the reflection path attribute $Si$ of the multipath signal is S3, it represents that the multipath signal is reflected multiple times by the environment or the moving object, and there is no solution or no stable solution to the position of the moving object at the current moment. It should be noted that for the reflection path attribute $Si$ of the multipath signal as S1, $\overline{Pi}$ may also be calculated by adopting the above formula

$$\overline{P}_i = D_{i,1} * \frac{(Pi - PBR)}{|Pi - PBR|} + PBR$$

.

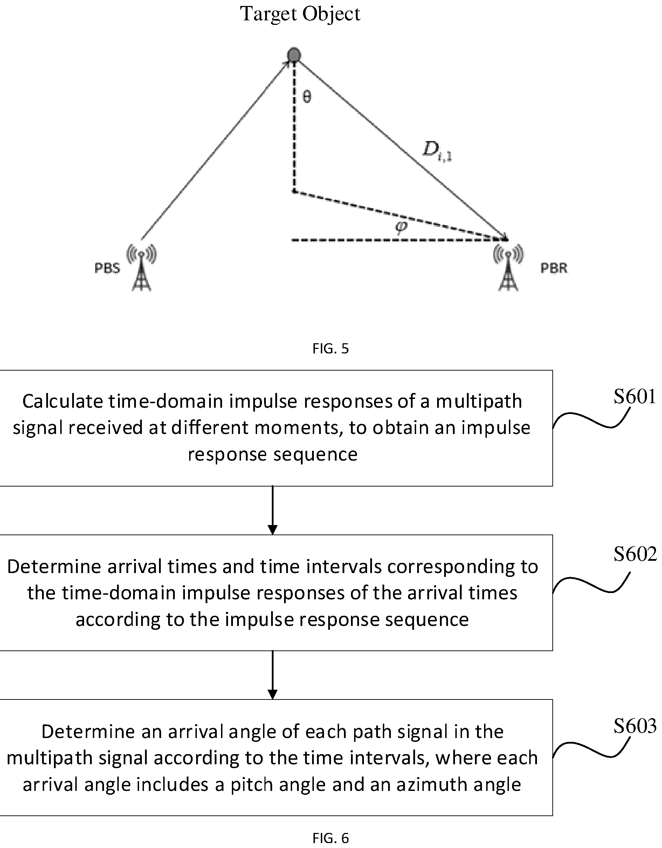

In a feasible implementation, as shown in FIG. 5, according to the position relationship among the target object, the transmitter PBS and the receiver PBR, the actual physical distance value $D_{i,1}$ between the target object and the receiver PBR at the current moment may be calculated by the following equation set

$$\begin{cases} x = D_{i,1} \sin\theta \cos\varphi & (1) \\ y = D_{i,1} \sin\theta \sin\varphi & (2) \\ z = D_{i,1} \cos\theta & (3) \\ \sqrt{x^2 + y^2 + z^2} = D_{i,1} & (4) \\ \sqrt{(x-a)^2 + (y-b)^2 + (z-c)^2} = D_i - D_{i,1} & (5) \end{cases}$$

Formula (5) is expanded to obtain the following:

$$x^2 + y^2 + z^2 - 2ax - 2by - 2cz + a^2 + b^2 + c^2 = D_i^2 - 2D_iD_{i,1} + D_{i,1}^2$$

Formula (4), $x^2 + y^2 + z^2 = D_{i,1}^2$, is substituted into the above formula, to obtain the following:

$$2ax + 2by + 2cz - 2D_iD_{i,1} = a^2 + b^2 + c^2 - D_i^2$$

Formulas (1), (2), and (3) are substituted to obtain the following:

$$2aD_{i,1} \sin\theta \cos\varphi + 2bD_{i,1} \sin\theta \sin\varphi + 2cD_{i,1} \cos\theta - 2D_iD_{i,1} = a^2 + b^2 + c^2 - D_i^2$$

$$D_{i,1} = \frac{a^2 + b^2 + c^2 - D_i^2}{2a \sin\theta \cos\varphi + 2b \sin\theta \sin\varphi + 2c \cos\theta - 2D_i}$$

where, the unknown quantity $(x, y, z)$ is a coordinate position of the target object, $D_{i,1}$ is an actual physical distance between the coordinate position of the target object and the coordinate PBR of the receiver; the known quantity $D_i$ is a sum of the distance of the multipath signal from the coordinate position PBS of the transmitter to the target object and the distance of the multipath signal from the target object to the coordinate position PBR of the receiver, PBS($a,b,c$) is a coordinate position of the transmitter, PBR(0,0,0) is a coordinate position of the receiver, $\theta$ is a pitch angle of an antenna of the receiver, and $\varphi$ is an azimuth angle.

In a feasible implementation, in a case where the sensing result $A_{Tn}$ at the current moment is consistent with the sensing result $A_{Tn-1}$ at the previous moment, it is determined that the current environment has not changed. In a case where the sensing result $A_{Tn}$ at the current moment is inconsistent with the sensing result $A_{Tn-1}$ at the previous moment, it is determined that the current environment has changed. A change in the current environment may include the presence of the target object in the current environment or the movement of the target object in the current environment. in a case where the target object moves in the current environment, a moving trajectory of the target object is determined according to the coordinate position of the target object at the current moment and coordinate position of the target object at the previous moment.

Based on this, compared with the prior art, the sensing method of the present application can sense multiple objects by means of the multipath signal in the multipath environment, and can sense not only moving objects but also stationary objects. It can be seen that the present application can overcome the multipath influence of complex environments and realize wireless sensing on moving objects and stationary objects in the environment under the condition of a known space map.

As shown in FIG. 6, step S101 may include but is not limited to the following substeps:

step S601: time-domain impulse responses of the multipath signal received at different moments are calculated, to obtain an impulse response sequence;

step S602: arrival times and time intervals corresponding to the time-domain impulse responses of the arrival times are determined according to the impulse response sequence; and

step S603: an arrival angle of each path signal in the multipath signal is determined according to the time intervals, where each arrival angle includes a pitch angle and an azimuth angle.

In a feasible implementation, a multi-antenna receiver is taken as an example, the multi-antenna receiver receives the multipath signal reflected to the multi-antenna receiver by the object in the environment, the multi-antenna receiver analyzes and calculates time-domain impulse responses of the multipath signal received by multiple antennas, the arrival time $ti$ of the multipath signal and a distributed time interval corresponding to the impulse response of the arrival time $ti$ of the multipath signal are determined according to an impulse response sequence, and then, according to the time interval corresponding to the impulse response of the arrival time $ti$ of the multipath signal, multi-antenna data is obtained to analyze the arrival angle $αi$ of each path, where the arrival angle $αi$ includes a pitch angle $θ$ and an azimuth angle $φ$.

In a feasible implementation, the time-domain impulse response is obtained by the time-domain mathematical processing on the multipath signal received by the receiver and the multipath signal transmitted by the transmitter, or by transforming the multipath signal received by the receiver from a time domain to a frequency domain, multiplying each first subcarrier data of the multipath signal by a conjugate of frequency domain data of the multipath signal transmitted by the transmitter to obtain each second subcarrier data, and then transforming each subcarrier data to the time domain.

In a feasible implementation, the time interval is an interval constituted by the minimum sampling point time and the maximum sampling point time when time domain response energy or frequency domain response energy exceeds a preset threshold.

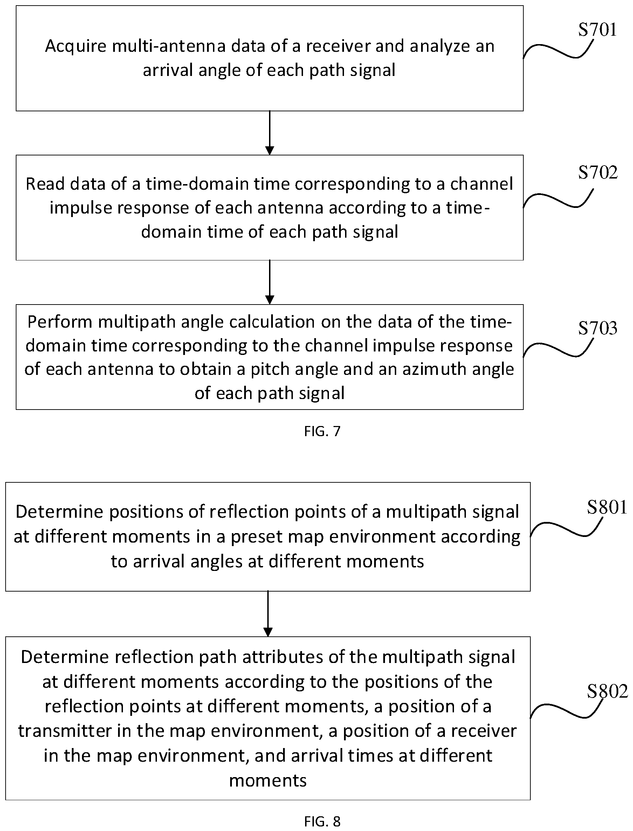

As shown in FIG. 7, step S603 may include but is not limited to the following substeps:

step S701: multi-antenna data of the receiver is acquired and an arrival angle of each path signal is analyzed;

step S702: data of a time-domain time corresponding to a channel impulse response of each antenna is read according to a time-domain time of each path signal; and

step S703: multipath angle calculation is performed on the data of the time-domain time corresponding to the channel impulse response of each antenna to obtain the pitch angle and the azimuth angle of each path signal.

In a feasible implementation, the multi-antenna data is acquired according to the time interval corresponding to the impulse response of the arrival time $ti$ of the multipath signal, the arrival angle $αi$ of each path signal is analyzed, the data of the time-domain time corresponding to the channel impulse response of each antenna is read according to the time-domain time of each path signal, and angle calculation of the multipath signal is performed to obtain the pitch angle $θ$ and the azimuth angle $φ$ of each path signal. It should be noted that angle calculation includes but is not limited to multiple signal classification (MUSIC) and other angle estimation methods.

As shown in FIG. 8, step S102 may include but is not limited to the following substeps:

step S801: positions of reflection points of the multipath signal at different moments in a preset map environment are determined according to the arrival angles at different moments; and

step S802: reflection path attributes of the multipath signal different moments are determined according to the positions of the reflection points at different moments, a position of a transmitter in the map environment, a position of a receiver in the map environment, and arrival times at different moments.

In a feasible implementation, the receiver receives the multipath signal and calculates an arrival time $ti$ and an arrival angle $\alpha i$ of the multipath signal. A position $Pi$ of the reflection point of the received multipath signal in the map environment is calculated according to the arrival angle $\alpha i$ of the multipath signal. Specifically, by taking the receiver as a coordinate origin, the multipath signal in a space of the map environment is extended according to the arrival angles at different moments until a first virtual intersection point is generated between the multipath signal and a building interface in the map environment, and the first virtual intersection point is the position of the reflection point of the multipath signal at different moments in the map environment. As shown in FIG. 1A, P1, P2, P3 and P4 are positions of reflection points of the multipath signal at the interface where a building wall is located in the map environment.

In a feasible embodiment, assuming that the distance from the position coordinate $Pi$ of the reflection point of the multipath signal in the map environment to the coordinate PBR of the receiver is $d_{i,1}$, and the distance from the position coordinate $Pi$ of the reflection point of the multipath signal in the map environment to the coordinate PBS of the transmitter is $d_{i,2}$, the distance $d_{i,1}$ from $Pi$ to the coordinate PBR of the receiver and the distance $d_{i,2}$ from $Pi$ to the coordinate PBS of the transmitter are calculated. $d_{i,1}$ and $d_{i,2}$ can be calculated according to the following formulas, $d_{i,1} = |PBR\text{-}Pi|$, and $d_{i,2} = |PBS\text{-}Pi|$.

In a feasible implementation, a distance value from the position of the target object to the coordinate PBR of the receiver is $|\overline{Pi}\text{-}PBR|$, a distance value from the position of the target object to the coordinate PBS of the transmitter is $|\overline{Pi}\text{-}PBS|$, and the sum of both is $Di = |\overline{Pi}\text{-}PBS| + |\overline{Pi}\text{-}PBR|$, where, $\overline{Pi}$ is a position coordinate of a physical reflection point of the target object in the environment at the current moment, which is used to represent an actual physical position coordinate of the target object at the current moment. $D_i$ may be calculated according to the arrival time $ti$ of the multipath signal, that is, $D_i = ti * v$, where v is the speed of light.

In a feasible implementation, the reflection path attribute $Si$ of the multipath signal may be determined according to the decision condition constituted by $D_i$, $d_{i,1}$, and $d_{i,2}$. When $D_i = d_{i,1} + d_{i,2}$, the reflection path attribute is the first reflection path S1; when $D_i < d_{i,1} + d_{i,2}$, the reflection path attribute is the second reflection path S2; and when $D_i > d_{i,1} + d_{i,2}$, the reflection path attribute is the third reflection path S3.

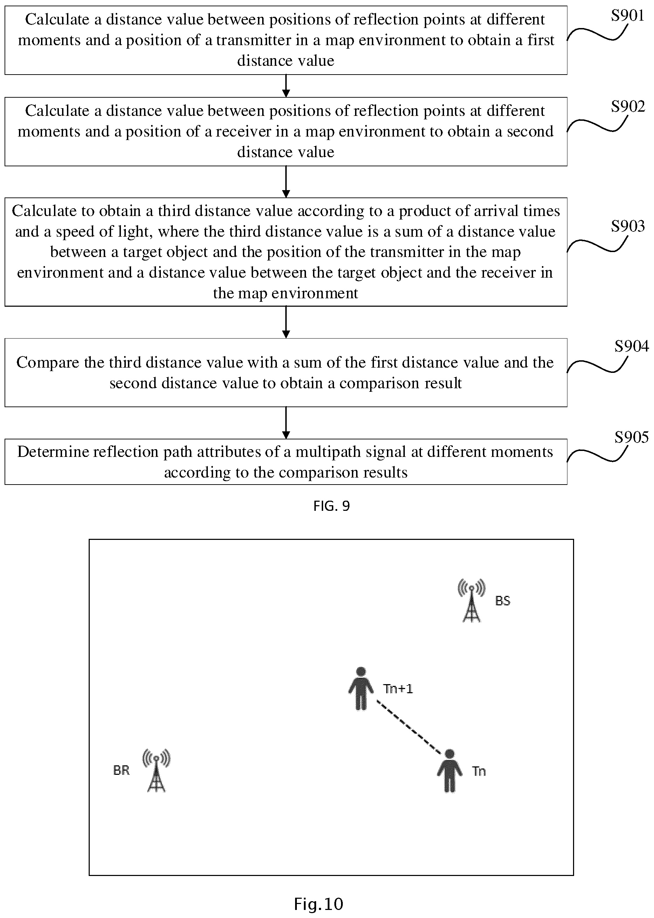

As shown in FIG. 9, step S802 may include but is not limited to the following substeps:

step S901: a distance value between positions of reflection points at different moments and a position of a transmitter in a map environment is calculated to obtain a first distance value;

step S902: a distance value between positions of reflection points at different moments and a position of a receiver in a map environment is calculated to obtain a second distance value;

step S903: a third distance value is obtained by calculation according to a product of arrival times and a speed of light, where the third distance value is a sum of a distance value between a target object and the position of the transmitter in the map environment and a distance value between the target object and the receiver in the map environment;

step S904: the third distance value is compared with a sum of the first distance value and the second distance value to obtain a comparison result; and

step S905: reflection path attributes of a multipath signal at different moments are determined according to the comparison results.

In a feasible embodiment, by taking Tn moment as an example, the distance value between the position coordinate $Pi$ of the reflection point of the multipath signal in the map environment and the coordinate PBR of the receiver in the map environment is calculated to obtain the first distance value $d_{i,1}$, and the distance value between the position coordinate $Pi$ of the reflection point of the multipath signal in the map environment and the coordinate PBS of the transmitter in the map environment is calculated to obtain the second distance value $d_{i,2}$. It can be seen that $d_{i,1}$ and $d_{i,2}$ can be calculated according to the following formulas, $d_{i,1} = |PBR\text{-}Pi|$, and $d_{i,2} = |PBS\text{-}Pi|$.

In a feasible implementation, the sum of the distance value between the target object and the position PBS of the transmitter in the map environment and the distance value between the target object and the position PBR of the receiver in the map environment is the third distance value $D_i$, that is, the third distance value is $Di = |\overline{Pi}\text{-}PBS| + |\overline{Pi}\text{-}PBR|$. $D_i$ may be calculated according to the arrival time $ti$ of the multipath signal, that is, $D_i = ti * v$, where v is the speed of light. The third distance value $D_i$ is compared with the sum of the first distance value $d_{i,1}$ and the second distance value $d_{i,2}$ to obtain three comparison results. When $D_i = d_{i,1} + d_{i,2}$, the reflection path attribute is the first reflection path S1; when $D_i < d_{i,1} + d_{i,2}$, the reflection path attribute is the second reflection path S2; and when $D_i > d_{i,1} + d_{i,2}$, the reflection path attribute is the third reflection path S3.

In a feasible implementation, in a case where the comparison result is that the third distance value $D_i$ is equal to the sum of the first distance value $d_{i,1}$ and the second distance value $d_{i,2}$, the reflection path attribute $Si$ of the multipath signal at the current moment is determined as the first reflection path S1, and the first reflection path S1 is used to characterize a wireless path of the multipath signal reflected once by the environment.

In a feasible implementation, in a case where the comparison result is that the third distance value $D_i$ is smaller than the sum of the first distance value $d_{i,1}$ and the second distance value $d_{i,2}$, the reflection path attribute $Si$ of the multipath signal at the current moment is determined as the second reflection path S2, and the second reflection path S2 is used to characterize a path of the multipath signal reflected once by the moving object in the environment.

In a feasible implementation, in a case where the comparison result is that the third distance value $D_i$ is greater than the sum of the first distance value $d_{i,1}$ and the second distance value $d_{i,2}$, the reflection path attribute $Si$ of the multipath signal at the current moment is determined as the third reflection path S3, and the third reflection path S3 is used to characterize a wireless path of the multipath signal reflected multiple times by the environment or the moving object.

In a feasible implementation, in a case where the reflection path attribute $Si$ is determined as the first reflection path S1, the sensing result is that the coordinate position $\overline{P}i$ of the target object at the current moment is consistent with the position $Pi$ of the reflection point. As shown in FIG. 2, when the reflection path attribute $Si$ of the multipath signal is S1, it represents that the position coordinate $\overline{P}i$ of the target object at the current moment is consistent with the position coordinate $Pi$ of the reflection point of the multipath signal in the map environment, that is, $\overline{P}i = Pi$, and the sensing result at the current moment is recorded as $A_{Tn} = \{(ti, \alpha i, Si, \overline{P}i), i \geq 1\}$.

In a feasible implementation, in a case where the reflection path attribute $Si$ is determined as the second reflection path S2, the sensing result is determining the coordinate position $Pi$ of the target object at the current moment according to the position $Pi$ of the reflection point at the current moment, the position PBR of the receiver in the map environment and a fourth distance value $D_{i,1}$, where the fourth distance value $D_{i,1}$ is an actual physical distance between the target object and the receiver. As shown in FIG. 3, when the reflection path attribute $Si$ of the multipath signal is S2, it represents that a distance of a signal reflection path of the target object is smaller than a spatial reflection point in the map, therefore, the position coordinate of the target object at the current moment is $\overline{P}_i = D_{i,1} * \frac{(Pi - PBR)}{|Pi - PBR|} + PBR$ , where $D_{i,1}$ is an actual physical distance value between the target object at the current moment to the receiver, $Pi$ is a position coordinate of the reflection point of the multipath signal at the current moment in the map environment, and PBR is a position coordinate of the receiver in map environment. The sensing result at the current moment is recorded as $A_{Tn} = \{(ti, \alpha i, Si, \overline{P}i), i \geq 1\}$.

In a feasible implementation, as shown in FIG. 4, when the reflection path attribute $Si$ of the multipath signal is S3, it represents that the multipath signal is reflected multiple times by the environment or the moving object, the distance of the signal reflection path of the target object is greater than the spatial reflection point in the map, and there is no solution or no stable solution to the position of the moving object at the current moment.

It should be noted that when the reflection path attribute $Si$ of the multipath signal as S1 or S2, $\overline{P}i$ may be calculated by adopting the formula $\overline{P}_i = D_{i,1} * \frac{(Pi - PBR)}{|Pi - PBR|} + PBR$ , and when the reflection path attribute $Si$ is S1, the result calculated according to the formula is $\overline{P}i = Pi$.

In a feasible implementation, the fourth distance value $D_{i,1}$ may be calculated according to the following equation set:

$$\begin{cases} x = D_{i,1} \sin\theta \cos\varphi & (1) \\ y = D_{i,1} \sin\theta \sin\varphi & (2) \\ z = D_{i,1} \cos\theta & (3) \\ \sqrt{x^2 + y^2 + z^2} = D_{i,1} & (4) \\ \sqrt{(x-a)^2 + (y-b)^2 + (z-c)^2} = D_i - D_{i,1} & (5) \end{cases}$$

Formula (5) is expanded to obtain the following:

$$x^2 + y^2 + z^2 - 2ax - 2by - 2cz + a^2 + b^2 + c^2 = D_i^2 - 2D_i D_{i,1} + D_{i,1}^2$$

Formula (4), $x^2 + y^2 + z^2 = D_{i,1}^2$ , is substituted into the above formula, to obtain the following:

$$2ax + 2by + 2cz - 2D_i D_{i,1} = a^2 + b^2 + c^2 - D_i^2$$

Formulas (1), (2), and (3) are substituted to obtain the following:

$$D_{i,1} = \frac{a^2 + b^2 + c^2 - D_i^2}{2a \sin\theta \cos\varphi + 2b \sin\theta \sin\varphi + 2c \cos\theta - 2D_i}$$

where the unknown quantity $(x, y, z)$ is a coordinate position of the target object, $D_{i,1}$ is an actual physical distance between the coordinate position of the target object and the coordinate PBR of the receiver; the known quantity $D_i$ is a sum of the distance of the multipath signal from the coordinate position PBS of the transmitter to the target object and the distance of the multipath signal from the target object to the coordinate position PBR of the receiver, PBS$(a,b,c)$ is a coordinate position of the transmitter, PBR(0,0,0) is a coordinate position of the receiver, $\theta$ is a pitch angle of an antenna of the receiver, and $\varphi$ is an azimuth angle.

Before step S101, the sensing method may further include but is not limited to the following step: synchronization correcting is performed on the transmitter and the receiver to realize clock synchronization.

In a feasible implementation, the transmitter and receiver complete clock synchronization before the transmitter transmits the multipath signal. The completion of clock synchronization between the transmitter and the receiver means that the transmitter and the receiver have completed synchronization to realize clock synchronization. Or, the transmitter and the receiver do not complete synchronization, it is necessary to measure a clock difference, hardware link delay and other information of the transmitter and the receiver, and calculate to obtain a synchronization correction amount, which is used to correct the received arrival time to realize clock synchronization. It should be noted that the arrival time $ti$ in the present application refers to the arrival time after correction.

In a feasible implementation, in a case where the sensing result $A_{Tn}$ at the current moment is consistent with the sensing result $A_{Tn-1}$ at the previous moment, it is determined that the current environment has not changed. In a case where the sensing result $A_{Tn}$ at the current moment is inconsistent with the sensing result $A_{Tn-1}$ at the previous moment, it is determined that the current environment has changed. A change in the current environment may include the presence of the target object in the current environment or the movement of the target object in the current environment. in a case where the target object moves in the current environment, a moving trajectory of the target object is determined according to the coordinate position of the target object at the current moment and coordinate position of the target object at the previous moment.

Based on this, compared with the prior art, the sensing method of the present application can sense multiple objects by means of the multipath signal in the multipath environment, and can sense not only moving objects but also stationary objects. It can be seen that the present application can overcome the multipath influence of complex environments and realize wireless sensing on moving objects and stationary objects in the environment under the condition of a known space map.

The sensing method provided in the present application is further introduced in conjunction with the specific drawings and embodiments.

Embodiment 1, as shown in FIG. 10, a case where a target object is a person, and the position at Tn moment and the position at Tn+1 moment are inconsistent when a person walks around the room is taken as an example.

After the clock synchronization between a transmitter BS and a receiver BR is completed, the transmitter BS transmits the multipath signal on the set time and wireless resources, where the coordinate of the transmitter BS is PBS and the coordinate of the receiver BR is PBR. Assuming that the receiver BR receives the multipath signal, the receiver BR receives the multipath signal and analyzes and calculates time-domain impulse responses of the multipath signal received by multiple antennas, the arrival time ti of the multipath signal and a time interval of the impulse response where ti is distributed are determined according to an impulse response sequence, and then, according to the time interval corresponding to the impulse response of the arrival time of the multipath signal and an MUSIC algorithm, multi-antenna data is obtained to calculate the arrival angle $\alpha i$ of each path signal, where i is the serial number of multiple paths, and is greater than or equal to 1.

Taking the coordinate PBR of the receiver BR as the origin and the ith multipath as an example, a virtual line is extended in an existing room map space according to the arrival angle $\alpha i$ of the received multipath signal until a first virtual intersection point is generated between the virtual line and an interface where the inner wall of the room is located, the first virtual intersection point is the reflection point of the multipath signal in the room map environment, the coordinate of the reflection point can be obtained as Pi through the room map space, and the distance $d_{i,1}$ between Pi and the receiver BR, and the distance $d_{i,2}$ between Pi and the transmitter BS are calculated. where $d_{i,1} = |PBR\text{-}Pi|$, and $d_{i,2} = |PBS\text{-}Pi|$. The actual physical distance $D_{i,1}$ from the target object to the receiver BR and the sum $D_i$ of the distance from the target object to the transmitter BS and the distance from the target object to the receiver BR are calculated.

The reflection path of the environment and the reflection path of the moving object are classified according to the decision condition, and the reflection path attribute of the multipath signal is determined, that is, the reflection path attribute $Si$ of the multipath signal may be determined according to the decision condition constituted by $D_i$, $d_{i,1}$, and $d_{i,2}$. When $D_i = d_{i,1} + d_{i,2}$, the reflection path attribute is S1; when $D_i < d_{i,1} + d_{i,2}$, the reflection path attribute is S2; and when $D_i > d_{i,1} + d_{i,2}$, the reflection path attribute is S3. As shown in FIG. 2, when the reflection path attribute is S1, the coordinate position $\overline{P}i$ of the target object is consistent with the position coordinate $Pi$ of the space reflection point in a map, that is, $\overline{P}i = Pi$, and the sensing result at the current moment is recorded as $A_{Tn} = \{(ti, \alpha i, Si, \overline{P}i), i \geq 1\}$. As shown in FIG. 3, when the reflection path attribute is S2, the coordinate position $\overline{P}i$ of the target object is inconsistent with the position coordinate $Pi$ of the space reflection point in the map, the position coordinate of the target object at the current moment is

$$\overline{P}_i = D_{i,1} * \frac{(Pi - PBR)}{|Pi - PBR|} + PBR$$

, and the sensing result at the current moment is recorded as $A_{Tn} = \{(ti, \alpha i, Si, \overline{P}i), i \geq 1\}$. It should be noted that for the reflection path attribute $Si$ of the multipath signal as S1, $\overline{P}i$ may also be calculated by adopting the formula $$\overline{P}_i = D_{i,1} * \frac{(Pi - PBR)}{|Pi - PBR|} + PBR$$ , and the result calculated is $\overline{P}i = Pi$.

The above process is repeated constantly to obtain the sensing results at different moments. For example, by comparing the sensing result $A_{Tn+1}$ corresponding to Tn+1 moment with the sensing result $A_{Tn}$ corresponding to Tn moment, the moving distance and direction of the person can be determined. Therefore, by comparing the sensing result $A_{Tn+1}$ corresponding to Tn+1 moment with the sensing result $A_{Tn}$ of the previous Tn moment, a moving trajectory of the person in the room can be determined.

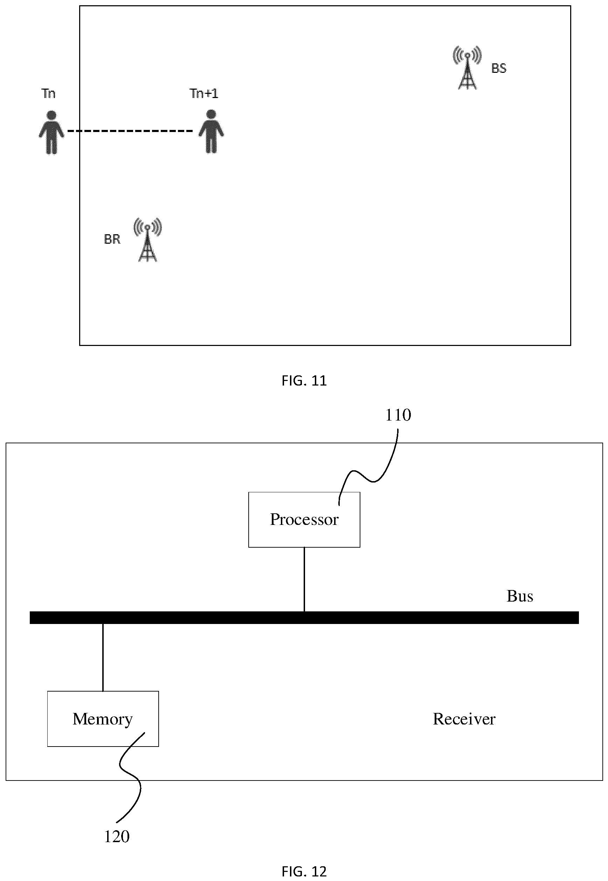

Embodiment 2, as shown in FIG. 11, a case where a target object is a person, there is no person in the room at Tn moment, but there is a person in the room at Tn+1 moment is taken as an example.

After the clock synchronization between the transmitter BS and the receiver BR is completed, the transmitter BS transmits the multipath signal on the set time and wireless resources, where the coordinate of the transmitter BS is PBS and the coordinate of the receiver BR is PBR. Assuming that the receiver BR receives the multipath signal, the receiver BR receives the multipath signal and analyzes and calculates time-domain impulse responses of the multipath signal received by multiple antennas, the arrival time ti of the multipath signal and a time interval of the impulse response where ti is distributed are determined according to an impulse response sequence, and then, according to the time interval corresponding to the impulse response of the arrival time of the multipath signal and an MUSIC algorithm, multi-antenna data is obtained to calculate the arrival angle $\alpha i$ of each path signal, where i is the serial number of multiple paths, and is greater than or equal to 1.

Taking the coordinate PBR of the receiver BR as the origin and the ith multipath as an example, a virtual line is extended in an existing room map space according to the arrival angle $\alpha i$ of the received multipath signal until a first virtual intersection point is generated between the virtual line and an interface where the inner wall of the room is located, the first virtual intersection point is the reflection point of the multipath signal in the room map environment, the coordinate of the reflection point can be obtained as Pi through the room map space, and the distance $d_{i,1}$ between Pi and the receiver BR, and the distance $d_{i,2}$ between Pi and the transmitter BS are calculated. where $d_{i,1} = |PBR\text{-}Pi|$, and $d_{i,2} = |PBS\text{-}Pi|$. The actual physical distance $D_{i,1}$ from the target object to the receiver BR and the sum $D_i$ of the distance from the target object to the transmitter BS and the distance from the target object to the receiver BR are calculated.

The reflection path of the environment and the reflection path of the moving object are classified according to the decision condition, and the reflection path attribute of the multipath signal is determined, that is, the reflection path attribute $Si$ of the multipath signal may be determined according to the decision condition constituted by $D_i$, $d_{i,1}$, and $d_{i,2}$. When $D_i = d_{i,1} + d_{i,2}$, the reflection path attribute is S1; when $D_i < d_{i,1} + d_{i,2}$, the reflection path attribute is S2; and when $D_i > d_{i,1} + d_{i,2}$, the reflection path attribute is S3. As shown in FIG. 2, when the reflection path attribute is S1, the coordinate position $\overline{P}i$ of the target object is inconsistent with the position coordinate $Pi$ of the space reflection point in the map, that is, $\overline{\overline{P}}i = Pi$, and the sensing result at the current moment is recorded as $A_{Tn} = \{(ti, \alpha i, Si, \overline{P}i), i \geq 1\}$. As shown in FIG. 3, when the reflection path attribute is S2, the coordinate position $\overline{P}i$ of the target object is inconsistent with the position coordinate $Pi$ of the space reflection point in the map, the position coordinate of the target object at the current moment is

$$\overline{P}_i = D_{i,1} * \frac{(Pi - PBR)}{|Pi - PBR|} + PBR$$

, and the sensing result at the current moment is recorded as $A_{Tn} = \{(ti, \alpha i, Si, \overline{P}i), i \geq 1\}$. It should be noted that for the reflection path attribute Si of the multipath signal as S1, $\overline{P}i$ may also be calculated by adopting the formula $$\overline{P}_i = D_{i,1} * \frac{(Pi - PBR)}{|Pi - PBR|} + PBR$$ , and the result calculated is $\overline{P}i = Pi$ .

The above process is repeated constantly to obtain the sensing results at different moments, and the sensing result $A_{Tn+1}$ corresponding to Tn+1 moment is compared with the sensing result $A_{Tn}$ corresponding to Tn moment. If the sensing results $A_{Tn}$, $A_{Tn-1}$, $A_{Tn-2}$, ... before the Tn moment are all consistent, it represents that no person enters the room before Tn, so the sensing results before Tn moment are basically consistent. When a person enters the room at Tn+1 moment, at the moment, the sensing result $A_{Tn+1}$ corresponding to Tn+1 moment changes compared with the sensing result $A_{Tn}$ at the previous Tn moment, it can be determined that a person enters the room at Tn+1 moment, and the moving trajectory of the person in the room can be further recorded according to the sensing results after Tn+1 moment.

As shown in FIG. 12, an embodiment of the present application further provides a receiver.

Specifically, the receiver includes: one or more processors 110 and a memory 120. A processor 110 and a memory 120 are taken as an example in FIG. 12. The processor 110 and the memory 120 may be connected via a bus or other means. FIG. 12 shows an example of a connection via a bus.

The memory 120 serves as a non-transitory computer readable storage medium that may be used to store non-transitory software programs non-transitory computer-executable programs, such as the above sensing method according to the embodiments of the present application. The processor 110 runs the non-transitory software programs or programs stored in the memory 120, to implement the above sensing method according to the embodiments of the present application.

The memory 120 may include a program storage area and a data storage area. The program storage area may store applications required for an operating system and at least one function. The data storage area may store data required for executing the sensing method according to the embodiments of the present application, etc. In addition, the memory 120 may include a high-speed random access memory, and may also include a non-transitory memory, such as at least one disk memory device, a flash memory device, or other non-transitory solid state memory devices. In some implementations, the memory 120 may optionally include memories set remotely relative to the processor 110, and these remote memories may be connected to a terminal via a network. Examples of the above network include, but are not limited to, the Internet, corporate Intranets, local area networks, mobile communication networks, and combinations thereof.

The non-transitory software programs and programs required to implement the above sensing method in the embodiments of the present application are stored in the memory 120 and, when executed by one or more processors 110, execute the above sensing method in the embodiments of the present application, for example, execute method steps S101 to S104 in FIG. 1B, method steps S601 to S603 in FIG. 6, method steps S701 to S703 in FIG. 7, method steps S801 to S802 in FIG. 8, and method steps S901 to S905 in FIG. 9A described above. The receiver determines arrival times and arrival angles of a multipath signal at different moments according to the multipath signal received at different moments; determines reflection path attributes of the multipath signal at different moments according to the arrival times and the arrival angles at different moments; obtains sensing results on a current environment at different moments according to the arrival times, the arrival angles, and the reflection path attributes at different moments; and determines whether the current environment has changed according to the sensing results at different moments. Therefore, the multipath signal received at different moments is analyzed and calculated by the receiver to obtain the arrival times and the arrival angles of the multipath signal at different moments, and then the reflection path attributes of the multipath signal at different moments are determined according to the arrival times and the arrival angles at different moments, the sensing results on the current environment at different moments are obtained according to the arrival times, the arrival angles, and the reflection path attributes at different moments, and the sensing result at a current moment is compared with the sensing result at a previous moment, so as to determine whether the current environment has changed. Based on this, compared with the prior art, sensing on the current environment can be realized by means of the multipath signal under the multipath environment by analyzing the multipath signal received at different moments.

In addition, an embodiment of the present application further provides a computer readable storage medium. The computer readable storage medium stores a computer-executable program that is executed by one or more control processors, for example, by one processor 110 in FIG.12, which can cause one or more processors 110 above to execute the above sensing method in the embodiments of the present application, for example, execute method steps S101 to S104 in FIG. 1B, method steps S601 to S603 in FIG. 6, method steps S701 to S703 in FIG. 7, method steps S801 to S802 in FIG. 8, and method steps S901 to S905 in FIG. 9A described above. Arrival times and arrival angles of a multipath signal at different moments are determined according to the multipath signal received at different moments; reflection path attributes of the multipath signal at different moments are determined according to the arrival times and the arrival angles at different moments; sensing results on a current environment at different moments are obtained according to the arrival times, the arrival angles, and the reflection path attributes at different moments; and whether the current environment has changed is determined according to the sensing results at different moments. Therefore, the multipath signal received at different moments is analyzed and calculated to obtain the arrival times and the arrival angles of the multipath signal at different moments, and then the reflection path attributes of the multipath signal at different moments are determined according to the arrival times and the arrival angles at different moments, the sensing results on the current environment at different moments are obtained according to the arrival times, the arrival angles, and the reflection path attributes at different moments, and the sensing result at a current moment is compared with the sensing result at a previous moment, so as to determine whether the current environment has changed. Based on this, compared with the prior art, sensing on the current environment can be realized by means of the multipath signal under the multipath environment by analyzing the multipath signal received at different moments.

It may be understood by those of ordinary skill in the art that all or some of the steps and systems in the methods disclosed herein may be implemented as software, firmware, hardware, and appropriate combinations thereof. Some or all physical components may be implemented as software executed by a processor, such as a central processor, a digital signal processor, or a microprocessor, or as hardware, or as integrated circuits, such as application-specific integrated circuits. Such software may be distributed on a computer readable medium, which may include a computer storage medium (or non-transient medium) and a communication medium (or transient medium). As is well known to those of ordinary skill in the art, the term of the computer storage medium includes volatile and nonvolatile, removable and non-removable media implemented in any method or technology for storage of information (such as computer-readable programs, data structures, program modules or other data). The computer storage medium includes, but is not limited to, RAM, ROM, EEPROM, flash memory or other memory technology, CD-ROM, digital video disk (DVD) or other optical disk storage, magnetic cartridge, magnetic tape, disk storage or other magnetic storage device, or any other media that can be used to store desired information and can be accessed by a computer. In addition, it is well known to those of ordinary skill in the art that the communication medium usually includes computer-readable programs, data structures, program modules, or other data in a modulated data signal such as a carrier or other transmission mechanism, and may include any information delivery medium.

**Claims**

1. A sensing method, comprising:

    determining arrival times and arrival angles of a multipath signal at different moments according to the multipath signal received at different moments;
    determining reflection path attributes of the multipath signal at different moments according to the arrival times and the arrival angles at different moments;
    obtaining sensing results on a current environment at different moments according to the arrival times, the arrival angles, and the reflection path attributes at different moments; and
    determining whether the current environment has changed according to the sensing results at different moments.

2. The method according to claim 1, wherein the determining reflection path attributes of the multipath signal at different moments according to the arrival times and the arrival angles at different moments, comprises:

    determining positions of reflection points of the multipath signal at different moments in a preset map environment according to the arrival angles at different moments; and
    determining the reflection path attributes of the multipath signal at different moments according to the positions of the reflection points at different moments, a position of a transmitter in the map environment, a position of a receiver in the map environment, and the arrival times at different moments.

3. The method according to claim 2, wherein the determining positions of reflection points of the multipath signal at different moments in a preset map environment according to the arrival angles at different moments, comprises:
    by taking the receiver as a coordinate origin, extending the multipath signal in a space of the map environment according to the arrival angles at different moments until a first virtual intersection point is generated between the multipath signal and a building interface in the map environment, the first virtual intersection point being the position of the reflection point of the multipath signal at different moments in the map environment.

4. The method according to the claim 2, wherein the determining the reflection path attributes of the multipath signal at different moments according to the positions of the reflection points at different moments, a position of a transmitter in the map environment, a position of a receiver in the map environment, and the arrival times at different moments, comprises:

    calculating a distance value between the positions of the reflection points at different moments and the position of the receiver in the map environment to obtain a first distance value;
    calculating a distance value between the positions of the reflection points at different moments and the position of the transmitter in the map environment to obtain a second distance value;
    calculating to obtain a third distance value according to a product of the arrival times and a speed of light, wherein the third distance value is a sum of a distance value between a target object and the position of the transmitter in the map environment and a distance value between the target object and the position of the receiver in the map environment;
    comparing the third distance value with a sum of the first distance value and the second distance value to obtain a comparison result; and

determining the reflection path attributes of the multipath signal at different moments according to the comparison results.

5. The method according to claim 4, wherein the determining the reflection path attributes of the multipath signal at different moments according to the comparison results, comprises:
in a case where the comparison result is that the third distance value is equal to the sum of the first distance value and the second distance value, determining the reflection path attribute of the multipath signal at a current moment as a first reflection path, which is used to characterize a wireless path of the multipath signal reflected once by the environment.

6. The method according to claim 5, wherein the determining the reflection path attributes of the multipath signal at different moments according to the comparison results, comprises:
in a case where the comparison result is that the third distance value is smaller than the sum of the first distance value and the second distance value, determining the reflection path attribute of the multipath signal at the current moment as a second reflection path, which is used to characterize a path of the multipath signal reflected once by a moving object in the environment.

7. The method according to claim 6, wherein the determining the reflection path attributes of the multipath signal at different moments according to the comparison results, comprises:
in a case where the comparison result is that the third distance value is greater than the sum of the first distance value and the second distance value, determining the reflection path attribute of the multipath signal at the current moment as a third reflection path, which is used to characterize a wireless path of the multipath signal reflected multiple times by the environment or the moving object.

8. The method according to claim 7, wherein the obtaining sensing results on a current environment at different moments according to the arrival times, the arrival angles, and the reflection path attributes at different moments, comprises:
in a case where the reflection path attribute is determined as the first reflection path, the sensing result being that a coordinate position of the target object at the current moment is consistent with the position of the reflection point.

9. The method according to claim 8, wherein the obtaining sensing results on a current environment at different moments according to the arrival times, the arrival angles, and the reflection path attributes at different moments, comprises:
in a case where the reflection path attribute is determined as the second reflection path, the sensing result being determining a coordinate position of the target object at the current moment according to the position of the reflection point at the current moment, the position of the receiver in the map environment and a fourth distance value, wherein the fourth distance value is an actual physical distance between the target object and the receiver.

10. The method according to the claim 9, wherein the determining a coordinate position of the target object at the current moment according to the position of the reflection point at the current moment, the position of the receiver in the map environment and a fourth distance value, comprises:
obtaining the coordinate position of the target object at the current moment by the following formula:

$$\bar{P}_i = D_{i,1} * \frac{(Pi - PBR)}{|Pi - PBR|} + PBR$$

, wherein, $\bar{P}i$ is a coordinate of the coordinate position of the target object at the current moment, $D_{i,1}$ is the fourth distance value, Pi is a position coordinate of the reflection point at the current moment, and PBR is a position coordinate of the receiver in the map environment.

11. The method according to claim 10, wherein the obtaining sensing results on a current environment at different moments according to the arrival times, the arrival angles, and the reflection path attributes at different moments, comprises:
in a case where the reflection path attribute is determined as the third reflection path, the sensing result being that there is no solution or no stable solution to a coordinate position of the target object at the current moment.

12. The method according to claim 11, wherein the determining whether the current environment has changed according to the sensing results at different moments, comprises:
in a case where the sensing result at the current moment is consistent with the sensing result at a previous moment, determining that the current environment has not changed.

13. The method according to claim 11, wherein the determining whether the current environment has changed according to the sensing results at different moments, comprises:
in a case where the sensing result at the current moment is inconsistent with the sensing result at a previous moment, determining that the current environment has changed.

14. The method according to claim 13, wherein the in a case where the sensing result at the current moment is inconsistent with the sensing result at a previous moment, determining that the current environment has changed, comprises:
in a case where the sensing result at the current moment is inconsistent with the sensing result at the previous moment, determining that the target object appears in the current environment or the target object moves in the current environment.

15. The method according to claim 14, wherein after the in a case where the sensing result at the current moment is inconsistent with the sensing result at the previous moment, determining that the target object appears in the current environment or the target object moves in the current environment, the method further comprises:
in a case where the target object moves in the current environment, determining a moving trajectory of the target object according to the coordinate position of the target object at the current moment and the coordinate position of the target object at the previous moment.

16. The method according to claim 1, wherein before the determining arrival times and arrival angles of a multipath signal at different moments according to the multipath signal received at different moments, the method further comprises:
performing synchronization correcting on a transmitter and a receiver to realize clock synchronization.

17. The method according to claim 1, wherein the determining arrival times and arrival angles of a multipath signal at different moments according to the multipath signal received at different moments, comprises:

calculating time-domain impulse responses of the multipath signal received at different moments, to obtain an impulse response sequence;
determining the arrival times and time intervals corresponding to the time-domain impulse responses of the arrival times according to the impulse response sequence; and
determining the arrival angle of each path signal in the multipath signal according to the time intervals, wherein each arrival angle comprises a pitch angle and an azimuth angle.

18. The method according to claim 17, wherein the time-domain impulse responses are obtained by time-domain mathematical processing on the multipath signal received by a receiver and the multipath signal transmitted by a transmitter.

19. The method according to claim 17, wherein the time-domain impulse response is obtained by transforming the multipath signal received by a receiver from a time domain to a frequency domain, multiplying each first subcarrier data of the multipath signal by a conjugate of frequency domain data of the multipath signal transmitted by a transmitter to obtain each second subcarrier data, and then transforming each second subcarrier data to the time domain.

20. The method according to claim 17, wherein the time interval is an interval constituted by the minimum sampling point time and the maximum sampling point time when time domain response energy or frequency domain response energy exceeds a preset threshold.

21. The method according to claim 17, wherein the determining the arrival angle of each path signal in the multipath signal according to the time intervals, comprises:

acquiring multi-antenna data of a receiver and analyzing the arrival angle of each path signal;
reading data of a time-domain time corresponding to a channel impulse response of each antenna according to the time-domain time of each path signal; and
performing multipath angle calculation on the data of the time-domain time corresponding to the channel impulse response of each antenna to obtain the pitch angle and the azimuth angle of each path signal.

22. The method according to any one of claims 1 to 21, wherein the multipath signal is an orthogonal frequency division multiplexing signal or a linear frequency modulation signal.

23. A receiver, comprising: a memory, a processor, and a computer program that is stored on the memory and capable of running on the processor, wherein the processor, when executing the computer program, implements the sensing method according to any one of claims 1 to 22.

24. A computer readable storage medium, storing computer-executable instructions, wherein the computer-executable instructions are used to implement the sensing method according to any one of claims 1 to 22.

FIG. 1A

FIG. 1B

BS

BR

FIG. 2

BS

BR

FIG. 3

BS

BR

FIG. 4

Target Object

FIG. 5

Calculate time-domain impulse responses of a multipath signal received at different moments, to obtain an impulse response sequence — S601

Determine arrival times and time intervals corresponding to the time-domain impulse responses of the arrival times according to the impulse response sequence — S602

Determine an arrival angle of each path signal in the multipath signal according to the time intervals, where each arrival angle includes a pitch angle and an azimuth angle — S603

FIG. 6

Acquire multi-antenna data of a receiver and analyze an arrival angle of each path signal

S701

Read data of a time-domain time corresponding to a channel impulse response of each antenna according to a time-domain time of each path signal

S702

Perform multipath angle calculation on the data of the time-domain time corresponding to the channel impulse response of each antenna to obtain a pitch angle and an azimuth angle of each path signal

S703

FIG. 7

Determine positions of reflection points of a multipath signal at different moments in a preset map environment according to arrival angles at different moments

S801

Determine reflection path attributes of the multipath signal at different moments according to the positions of the reflection points at different moments, a position of a transmitter in the map environment, a position of a receiver in the map environment, and arrival times at different moments

S802

FIG. 8

Calculate a distance value between positions of reflection points at different moments and a position of a transmitter in a map environment to obtain a first distance value — S901

Calculate a distance value between positions of reflection points at different moments and a position of a receiver in a map environment to obtain a second distance value — S902

Calculate to obtain a third distance value according to a product of arrival times and a speed of light, where the third distance value is a sum of a distance value between a target object and the position of the transmitter in the map environment and a distance value between the target object and the receiver in the map environment — S903

Compare the third distance value with a sum of the first distance value and the second distance value to obtain a comparison result — S904

Determine reflection path attributes of a multipath signal at different moments according to the comparison results — S905

FIG. 9

Fig.10

FIG. 11

FIG. 12

## INTERNATIONAL SEARCH REPORT

| International application No. |
| --- |
| **PCT/CN2023/083778** |

### A. CLASSIFICATION OF SUBJECT MATTER

H04W24/08(2009.01)i

According to International Patent Classification (IPC) or to both national classification and IPC

### B. FIELDS SEARCHED

Minimum documentation searched (classification system followed by classification symbols)

IPC:H04W,H04L,H04Q7/-

Documentation searched other than minimum documentation to the extent that such documents are included in the fields searched

Electronic data base consulted during the international search (name of data base and, where practicable, search terms used)

CNTXT, CNKI, WPABSC, ENTXTC, 3GPP: 感知, 感测, 到达, 时间, 时刻, 角, TOA, DOA, 多径, 信号, 发射, 环境, 位置, 变化, 改变, sense, arrive, time, angle, multipath, signal, emission, environment, location, change

### C. DOCUMENTS CONSIDERED TO BE RELEVANT

| Category* | Citation of document, with indication, where appropriate, of the relevant passages | Relevant to claim No. |
| --- | --- | --- |
| A | CN 113286362 A (BEIJING UNIVERSITY OF POSTS AND TELECOMMUNICATIONS) 20 August 2021 (2021-08-20) description, paragraphs [0002]-[0138], and figures 1-4 | 1-24 |
| A | CN 107656243 A (TIANJIN UNIVERSITY) 02 February 2018 (2018-02-02) entire document | 1-24 |
| A | CN 108811082 A (ARMY ENGINEERING UNIVERSITY OF PLA) 13 November 2018 (2018-11-13) entire document | 1-24 |
| A | US 2022196778 A1 (HUAWEI TECHNOLOGIES CO., LTD.) 23 June 2022 (2022-06-23) entire document | 1-24 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 June 2023** | **20 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/083778**

| Patent document cited in search report | | | Publication date (day/month/year) | Patent family member(s) | | | Publication date (day/month/year) |
|---|---|---|---|---|---|---|---|
| CN | 113286362 | A | 20 August 2021 | None | | | |
| CN | 107656243 | A | 02 February 2018 | None | | | |
| CN | 108811082 | A | 13 November 2018 | None | | | |
| US | 2022196778 | A1 | 23 June 2022 | WO | 2021032307 | A1 | 25 February 2021 |
| | | | | EP | 4014061 | A1 | 22 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210846533